**Europäisches Patentamt**

**European Patent Office**

**Office européen des brevets**

(19)

(11) Numéro de publication : **0 465 274 A1**

# (12) DEMANDE DE BREVET EUROPEEN

(21) Numéro de dépôt : **91400404.9**

(22) Date de dépôt : **15.02.91**

(51) Int. Cl.⁵ : **G01F 11/28**

(30) Priorité : **02.07.90 FR 9008333**
**14.12.90 FR 9015710**

(43) Date de publication de la demande :
**08.01.92 Bulletin 92/02**

(84) Etats contractants désignés :
**AT BE CH DE DK ES FR GB GR IT LI LU NL SE**

(71) Demandeur : **LAMARQUE S.A.**
**Z.I. de Rouxmesnil-Bouteilles**
**F-76370 Neuville les Dieppe (FR)**

(72) Inventeur : **Domange, Jean-Gabriel**
**4 square d'Arcole**
**F-78150 Le Chesnay (FR)**
Inventeur : **Bertin, Alain Jean Luc**
**2 place de la République**
**F-77500 Chelles (FR)**
Inventeur : **Gallardo, Manuel Antoine**
**Raymond**
**3 rue Albert Mattard**
**F-77400 Carnetin (FR)**

(74) Mandataire : **Warcoin, Jacques et al**
**Cabinet Régimbeau 26, avenue Kléber**
**F-75116 Paris (FR)**

(54) **Doseur mécanique.**

(57)  La présente invention concerne un doseur mécanique comprenant essentiellement une chambre de dosage (1), des organes supérieur et inférieur (2, 2') mécaniques, de fermeture ou ouverture de deux orifices (3, 3') de ladite chambre, des moyens mécaniques de liaison cinématique (4) entre des moyens de commande desdits organes (2, 2') et ces derniers. Ce Doseur est caractérisé en ce que lesdits moyens de commande et lesdits organes supérieur et inférieur (2, 2') sont extérieurs à la chambre de dosage (1). Dans un mode de réalisation, il comporte un premier conduit (6) au-dessus dudit orifice supérieur (3), un deuxième conduit (6') au dessous dudit orifice inférieur (3') ; lesdits conduits (6, 6') comportant une zone constituée en matériau flexible (10, 10'), lesdits organes supérieur et inférieur (2, 2') consistant en des moyens d'écrasement de ladite zone en matériau flexible (10, 10') pouvant adopter une position d'écrasement obstruant lesdits conduits pour la fermeture ou une position de dégagement pour l'ouverture, lesdits moyens de liaison cinématique (4).

EP 0 465 274 A1

FIG.2

La présente invention concerne un dispositif permettant de libérer des quantités déterminées et mesurées de liquide (ou doses), notamment d'alcool, à partir d'un réservoir, le dispositif étant placé dessous. Le réservoir consiste, par exemple, en une bouteille, la bouteille étant alors en position retournée, et le dispositif adapté à son col. Ce dispositif permet de distribuer ladite dose dans un récipient, par exemple un verre, disposé sous un orifice de sortie de la dose de liquide dudit dispositif. Dans la présente demande, on dénommera "doseur", ce dispositif distributeur de liquide en quantités dosées, conformément à l'usage dans le secteur technique considéré.

Le doseur concerné par la présente invention est de fonctionnement essentiellement mécanique c'est-à-dire qu'il ne met en jeu dans son fonctionnement, aucun moteur, commande ou clapet électrique ou électronique, compte tenu des lavages et rinçages fréquents dont il doit faire l'objet.

Ce doseur est, le plus généralement, utilisé dans des établissements de débit de boissons alcoolisées. Il est destiné à être fixé sur ou solidaire d'un support de bouteille, lui-même destiné à être fixé à un mur ou une étagère par exemple.

Le doseur mécanique traditionnel, tel qu'il est décrit notamment dans les brevets français FR 1 441 023, FR 1 470 954 et FR 1 471 037, comprend une chambre de dosage communiquant par un passage axial avec un réservoir d'alimentation, et un organe d'actionnement traversant une ouverture de base de la chambre de dosage pour provoquer par sa montée la vidange de la chambre de dosage à travers un orifice de sortie qui est ménagé dans la tige de l'organe d'actionnement dont l'extrémité supérieure porte un obturateur du passage de communication avec le réservoir. L'organe d'actionnement est muni à sa base de bras latéraux destinés à être rencontrés par le pourtour du verre à remplir et par lesquels le mouvement ascendant est transmis à l'organe d'actionnement pour vider le contenu de la chambre de dosage.

On cherche depuis maintenant longtemps, une alternative à ce type de doseur qui présente notamment les inconvénients suivants.

L'organe d'actionnement permettant le remplissage et la vidange de la chambre de dosage est situé à l'intérieur de ladite chambre. Le liquide pendant son écoulement entre le réservoir et la chambre, pendant son stockage dans la chambre, puis lors de la vidange de la chambre rencontre donc toujours cet organe.

Lorsque cet organe, actionné pour la vidange, est en mouvement, il remue le liquide contenu dans la chambre. La qualité organoleptique du liquide peut s'en trouver altérée, notamment quand il s'agit d'alcool.

En outre, l'alcool provoque, à la longue, l'usure dudit organe d'actionnement. Ce mouvement et cette usure sont à l'origine de défauts d'échantéité constatés dans la chambre de dosage.

Sur le plan de l'hygiène, il n'est pas souhaitable que des pièces travaillant mécaniquement soient immergées dans le liquide destiné à être consommé. Par ailleurs, les bras latéraux à la base de l'organe d'actionnement sont au contact direct avec le pourtour supérieur du verre qui peut avoir rencontré préalablement les lèvres d'un utilisateur.

Le but de la présente invention est donc de fournir un nouveau doseur palliant aux inconvénients mentionnés ci-dessus. Ce nouveau doseur, compte tenu de l'usage intensif auquel il est destiné, doit donc être non seulement de fonctionnement mécanique, mais aussi simple, robuste et présenter en outre toutes les garanties d'étanchéité et d'hygiène.

Pour ce faire, la présente invention fournit avantageusement un doseur tel que le liquide dans son circuit d'écoulement et de stockage ne rencontre de préférence aucun organe mécanique et notamment pas de pièce en mouvement lors de l'ouverture et de la fermeture de la chambre de dosage.

La présente invention fournit également un doseur doté d'un organe de préhension ou de butée du récipient, organe à mouvement à composante latérale et non plus uniquement verticale, commandant le fonctionnement de l'ouverture et la fermeture de la chambre de dosage, de manière à ce que cet organe rencontre une partie du verre ou du récipient qui n'a pas été en contact avec les lèvres de l'utilisateur, c'est-à-dire autre que le pourtour supérieur du verre.

La présente invention fournit enfin un doseur dont le volume de la chambre de dosage et partant la quantité dosée peuvent être modifiées aisément.

La présente invention a en effet pour objet un doseur mécanique comprenant un compartiment ou chambre de dosage et stockage d'une quantité déterminée et mesurée de liquide ou dose, comportant

– deux orifices supérieur et inférieur, de remplissage et vidange, respectivement dans les parties supérieure et inférieure de ladite chambre,

– des organes supérieur et inférieur mécaniques de fermeture ou ouverture des dits orifices respectivement supérieur et inférieur,

– des moyens de commande mécanique des dits organes de fermeture et ouverture des dits orifices,

– des moyens mécaniques de liaison cinématique entre lesdits organes de fermeture et ouverture et leurs dits moyens de commande.

Selon sa caractéristique essentielle, le doseur selon l'invention est caractérisé en ce que lesdits moyens de commande, lesdits moyens de liaison cinématique et lesdits organes supérieur et inférieur, de fermeture et d'ouverture sont extérieurs à la chambre de dosage.

Dans un mode de réalisation, il comporte en outre
– un premier conduit tubulaire monté au-dessus de l'orifice supérieur de la chambre de dosage et,
– un deuxième conduit tubulaire monté au dessous de l'orifice inférieur de la chambre de dosage,

– lesdits premier et deuxième conduits comportant une zone constituée en matériau flexible,

– lesdits organes supérieur et inférieur de fermeture et ouverture des dits orifices consistant en des moyens d'écrasement ou de pincement de ladite zone en matériau flexible, pouvant adopter une position d'écrasement obstruant lesdits conduits pour la fermeture ou une position d'escamotage ou de dégagement pour l'ouverture,

– lesdits moyens de commande, lesdits moyens de liaison cinématique et lesdits organes supérieur et inférieur, de fermeture et d'ouverture étant extérieurs à la chambre de dosage et aux dits conduits.

Cette dernière caractéristique est très avantageuse pour les raisons mentionnées précédemment. Elle autorise, en outre, un lavage et rinçage de la chambre de dosage moins fréquent par rapport au doseur décrit ci-dessus.

Dans un mode réalisation de l'invention, lesdits conduits sont des tubes rigides revêtus à l'intérieur d'une gaine dudit matériau flexible exposée aux dits organes de fermeture et ouverture par une zone en regard d'une fenêtre ménagée dans chacun des dits tubes. Le matériau flexible sous l'action de la pression du liquide reprend sa forme d'origine lorsque les moyens d'écrasement ou de pincement adoptent une position de dégagement. Toutefois de préférence, ce matériau sera un matériau à mémoire, c'est-à-dire susceptible de reprendre par lui-même sa forme d'origine après déformation.

Lesdits moyens de liaison cinématique entre lesdits moyens de commande et lesdits organes de fermeture et ouverture seront avantageusement constitués par une came dotée de deux chemins de came supérieur et inférieur qui coopèrent respectivement avec lesdits organes supérieur et inférieur de fermeture et d'ouverture par l'intermédiaire de deux toucheaux de came, le mouvement de la came et des toucheaux commandant les positions d'écrasement et de dégagement des dits organes supérieur ou inférieur, de telle sorte que lorsque l'organe supérieur est en position d'ouverture de remplissage de ladite chambre, l'organe inférieur est en position de fermeture, et lorsque l'organe supérieur est en position de fermeture, l'organe inférieur est en position d'ouverture et de vidange de ladite chambre l'ouverture et la fermeture desdits orifices supérieur et inférieur étant synchronisées de façon à ce que l'orifice supérieur ne commence à s'ouvrir que lorsque l'orifice inférieur est complètement fermé et réciproquement l'orifice inférieur ne commence à s'ouvrir que lorque l'orifice supérieur est complètement fermé.

Selon une autre caractéristique avantageuse de la présente invention lesdits organes supérieur et inférieur de fermeture et d'ouverture des orifices de la chambre de dosage, comportent une partie formant ledit toucheau de came et une partie d'écrasement des dits conduits en position de fermeture.

Dans un mode de réalisation particulier, la came coulisse dans une direction longitudinale à composante verticale, de bas en haut et de haut en bas, notamment verticalement, le long de la chambre de dosage, lesdits chemins de came étant constitués chacun par deux pans longitudinaux supérieur et inférieur encadrant un pan incliné médian.

Selon une autre caractéristique de la présente invention, lesdits moyens de commande consistent en un organe de préhension ou de butée ou patte monté(e) à pivot autour d'un axe et coopèrent cinématiquement avec la came par l'intermédiaire de moyens d'appui sur laquelle repose ladite came, de sorte que lorsque la patte pivote, notamment par la pression exercée latéralement à son endroit, manuellement ou à l'aide d'un récipient à remplir, les moyens d'appui sont animés d'un mouvement à composante longitudinale, notamment verticale, entraînant le mouvement de la came.

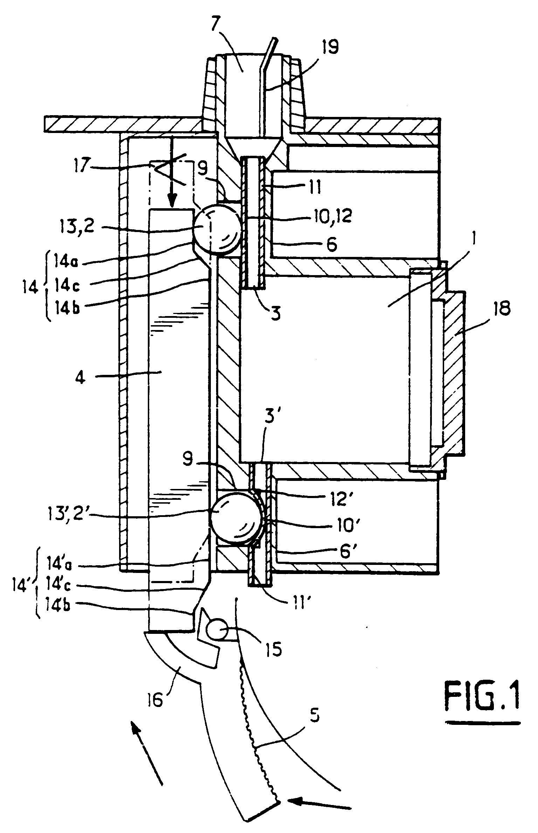

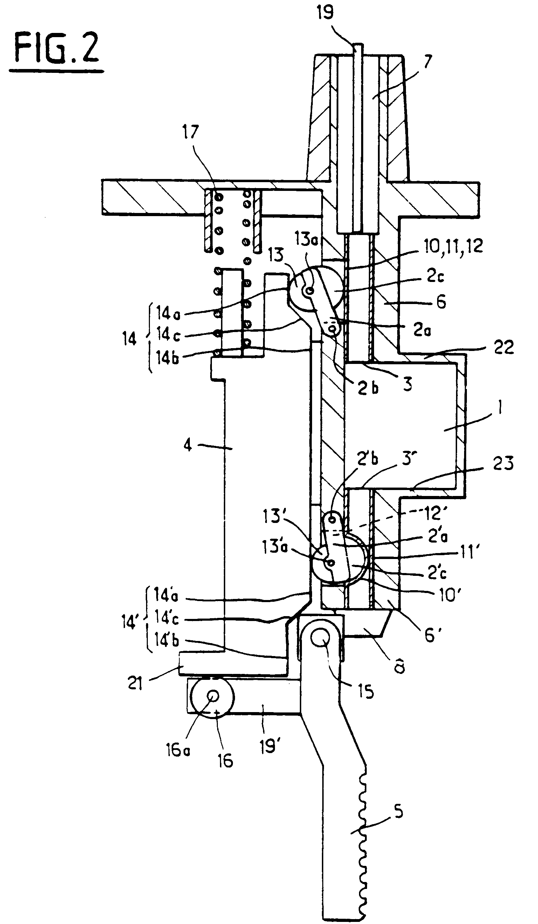

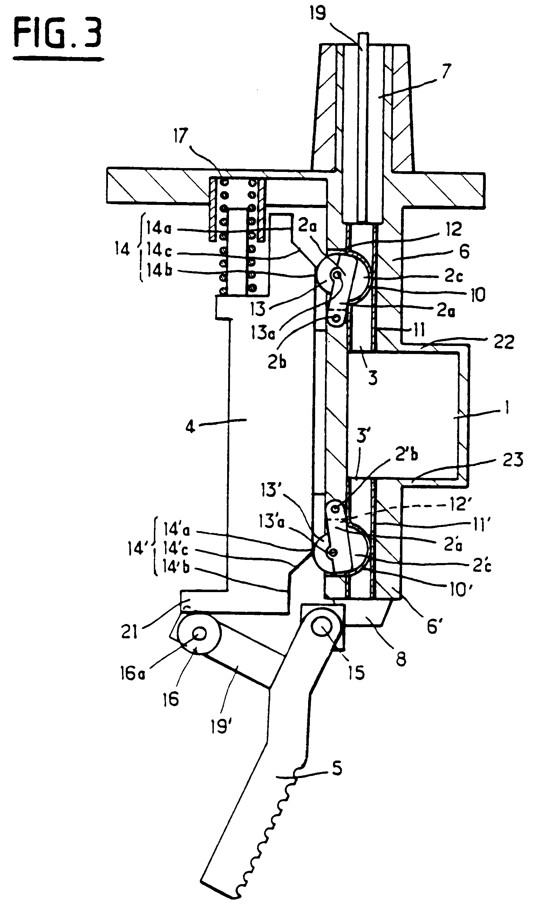

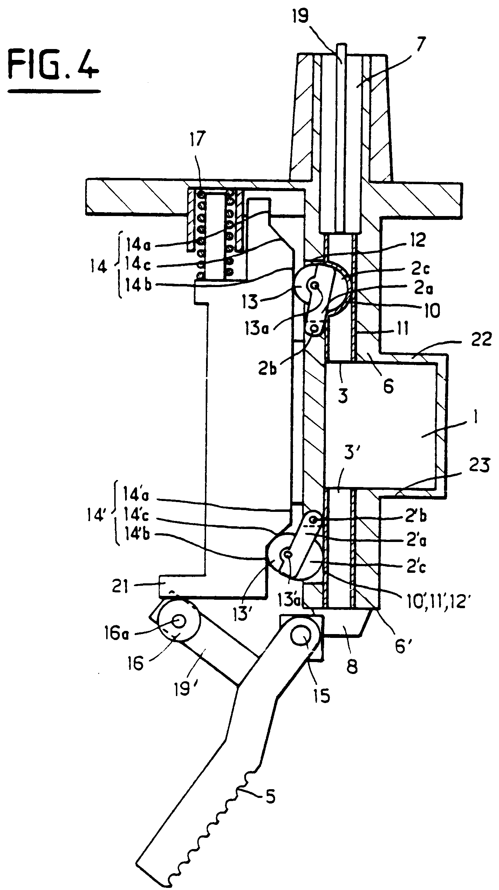

D'autres caractéristiques et avantages de la présente invention sont décrites ci-après en référence aux figures 1 à 6 qui n'entendent pas les limiter. Ces figures représentent deux exemples de doseurs mécaniques selon l'invention en position de remplissage (figures 1 et 2), de vidange (figure 4) ou intermédiaire (figure 3). Dans les figures 1 à 4, la direction longitudinale correspond à la direction verticale et la came (4) coulisse verticalement à l'extérieur de la chambre de dosage (1).

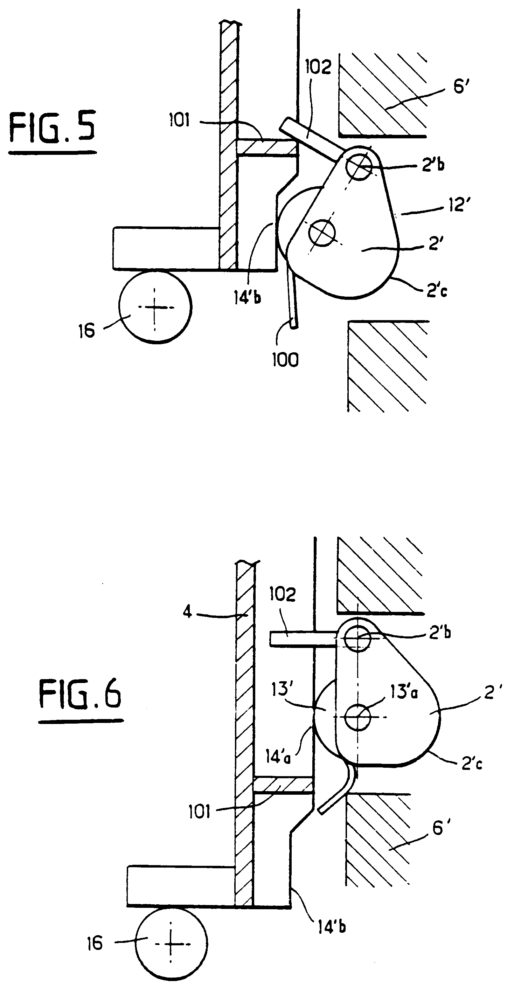

Des figures 5 et 6 représentent un dit organe inférieur muni d'un ressort de rappel, en position de vidange de la chambre de dosage (figure 5) et en position de remplissage de la chambre de dosage (figure 6).

Selon l'invention, les parties formant toucheaux de came (13, 13') et les parties d'écrasement (2c, 2'c) desdits organes (2, 2') de fermeture et ouverture des orifices (3, 3') de la chambre de dosage présenteront avantageusement une forme arrondie par laquelle ils rencontrent respectivement le chemin de came et la zone en matériau flexible.

Ce sera par exemple le cas si lesdits organes sont constitués chacun par une bille telle que représenté à la figure 1.

La figure 1 représente en effet un doseur dans lequel les organes supérieur (2) et inférieur (2') d'écrasement ou de dégagement des dits premier (6) et deuxième (6') conduits et donc de fermeture et ouverture des orifices supérieur (3) et inférieur (3') de la chambre de dosage (1) sont constitués par des billes évoluant dans des canaux transversaux (9, 9'), perpendiculaires à la direction longitudinale, entre lesdits chemins de came (14, 14') et lesdites fenêtres (12, 12') desdits conduits.

L'organe d'accueil du réservoir (7) à l'extrémité supérieur du doseur par lequel ce dernier est monté à l'intérieur du col d'une bouteille renversée ou tout autre réservoir d'alimentation, est un tube d'admission recouvert à l'extérieur de liège. Le tube d'admission (7) comporte classiquement à l'intérieur un brise-jet (19) ou une plaque de séparation de manière à créer des flux laminaires facilitant le remplissage de la chambre de dosage en facilitant le courant ascendant de l'air destiné à remplacer le liquide prélevé dans la bouteille.

Sur les figures 1 à 4, un premier conduit (6) tubulaire assure la liaison entre un organe d'accueil dudit réservoir (7) et ledit orifice supérieur (3) de la chambre de dosage et, un deuxième conduit (6') tubulaire assure la liaison entre un organe de vidange (8), notamment un cône de vidange, et ledit orifice inférieur (3') de la chambre de dosage, lesdits premier et deuxième conduits (6, 6') comportant une zone constituée en matériau flexible (10, 10'). Lesdits tubes (6, 6') rigides sont revêtus à l'intérieur d'une gaine (11, 11') dudit matériau flexible exposée aux dits organes (2, 2') de fermeture et ouverture par une zone (10, 10') en regard d'une fenêtre (12, 12') ménagée dans chacun des dits tubes.

Tels que représentés sur les figures 1 à 4, à titre d'exemple les pans longitudinaux inférieur et supérieur (14b, 14'a) des chemins de came respectivement supérieur et inférieur forment avantageusement un même grand pan central longitudinal ; et les pans longitudinaux supérieur et inférieur (14a, 14'b) des chemins de came respectivement supérieur et inférieur sont dans le même axe, en retrait par rapport aux pans inférieur et supérieur (14b, 14'a) visés précédemment, vis à vis des conduits correspondants (6, 6'). Lesdits pans inclinés médians supérieur et inférieur sont donc d'inclinaison symétrique par rapport à un axe médian du grand pan central et perpendiculaire à ladite direction longitudinale.

On comprend donc que chaque pan incliné (14c, 14'c), lorsqu'il rencontre le toucheau de came provoque selon le cas, le rapprochement ou l'éloignement du toucheau de came vis à vis du conduit et l'écrasement ou le dégagement respectivement de la zone en matériau flexible (10, 10'). Lorsque les toucheaux de came rencontrent les pans longitudinaux à chaque extrémité de la came (14a, 14'b), ils provoquent l'éloignement et le dégagement des toucheaux de came (13, 13') et partant l'ouverture des dits conduits sous la pression de la zone en matériau flexible (10, 10').

Les figures 2 à 4 représentent un exemple de séquence possible dans les opérations d'ouverture et de fermeture de la chambre de dosage pour son remplissage ou sa vidange.

1. une position de fermeture de l'orifice inférieur (3') avec l'orifice supérieur (3) ouvert représentée figures 1 et 2 où

. le toucheau de came inférieur (13') coopère avec le pan longitudinal supérieur du chemin de came inférieur (14'a) et

. le toucheau de came supérieur (13) coopère avec le pan longitudinal supérieur du chemin de came supérieur (14a).

2. une position intermédiaire de fermeture des deux orifices supérieur et inférieur représentée figure 3 où

. le toucheau de came supérieur (13) coopère avec le pan longitudinal inférieur du chemin de came supérieur (14b).

. le toucheau de came inférieur (13') coopère avec le pan longitudinal supérieur du chemin de came inférieur (14'a).

3. une position d'ouverture de l'orifice inférieur et fermeture de l'orifice supérieur représentée figure 4 où

. le toucheau de came inférieur (13') coopère avec le pan longitudinal inférieur du chemin de came inférieur (14'b) et

. le toucheau de came supérieur (13) coopère avec le pan longitudinal inférieur du chemin de came supérieur (14b).

Selon une variante avantageuse de réalisation représentée à titre illustratif aux figures 2 et 3, de manière à éliminer le frottement entre les chemins de came et les toucheaux, les toucheaux de came consistent en des galets (13, 13') montés chacun sur un premier axe de rotation (13a, 13'a) perpendiculaire à ladite direction longitudinale et parallèle aux dits pans de la came, de sorte que les galets peuvent rouler sur lesdits pans lorsqu'ils les rencontrent, chacun des dits premiers axes (13a, 13'a) étant solidaire d'une extrémité d'un bras (2a, 2'a) monté à pivot à son autre extrémité sur un deuxième axe (2b, 2'b) parallèle aux dits premiers axes, chaque bras (2a, 2'a) pivotant entre deux positions extrêmes délimitées par la position de rencontre du chemin de came correspondant au dégagement ou à l'escamotage d'une part, et la position de rencontre de la zone en matériau flexible du conduit, correspondant à l'écrasement, d'autre part. Les bras supérieur et inférieur (2a, 2'a) sont montés de façon symétrique par rapport à un plan médiateur perpendiculaire horizontal.

Ainsi, nécessairement lorsque le chemin de came comporte deux pans longitudinaux supérieur et inférieur encadrant un pan incliné médian, le bras est incliné sensiblement dans la même direction que le pan incliné du chemin de came correspondant en position d'ouverture de l'orifice correspondant et pour sa fermeture, et le galet, étant solidaire du bras, pivote de manière à se rapprocher de la zone en matériau flexible jusqu'à l'écraser, et tourne en rotation autour de son axe en roulant sur le pan incliné correspondant lorsqu'il le rencontre.

Ainsi, tel que représenté aux figures 1 à 4, le bras du toucheau de came supérieur (2a) pivote au-dessus de son dit deuxième axe supérieur (2b) correspondant, et le bras du toucheau de came inférieur (2′a) pivote au dessous de son dit deuxième axe inférieur (2′b) correspondant.

De préférence chacun des dits bras (2a, 2′a) présente du côté pouvant rencontrer les zones en matériau flexible, une saillie de forme arrondie (2c, 2′c) constituant la partie d'écrasement proprement dite.

Sur les figures 2 à 4, pour éviter les frottements, le moyen d'appui de l'extrémité inférieure de la came comporte avantageusement un galet (16) en rotation autour de son axe central (16a), ce dernier étant lié cinématiquement à ladite patte ou au dit taquet (5) par l'intermédiaire d'un bras (19′).

Le galet (16) est lié à la patte (5) par l'intermédiaire d'un bras (19′) en forme de fourche qui est fixé à son axe (16a) soit de part et d'autre du galet (16) soit dans une rainure centrale tel que représenté. Le galet (16) est animé d'un mouvement dans ladite direction longitudinale à composante verticale lorsque ladite patte ou ledit taquet est actionné et pivote. En outre, un mouvement de rotation du galet (16) autour de son axe (16a) permet au galet de rouler sur la base (21) de l'extrémité inférieur de la came (4) lorsque la patte est actionnée. Telle que représentée, la saillie de la fourche (19′) qui dépasse du galet rentre dans une rainure ménagée dans la base (21) de la came.

Eventuellement, la came (4) sera équipée à son extrémité supérieure d'un ressort de rappel (17) la repoussant vers le bas entraînant ainsi la fermeture de l'orifice inférieur (3′) de la chambre de dosage.

Avantageusement, lesdits organes de fermeture et ouverture de la chambre sont équipés de moyens de rappel tels que des ressorts les ramenant vers la position de dégagement des dits conduits, en particulier pour l'organe inférieur (2′) dans la mesure où lors de la vidange de la chambre de dosage, la pression du liquide exercée sur le matériau flexible est moindre que celle exercée par le liquide contenu dans le réservoir d'alimentation lors du remplissage de la chambre de dosage, la quantité de liquide dans la chambre de dosage étant inférieur à la quantité de liquide contenu dans le réservoir d'alimentation de la chambre de dosage.

C'est pourquoi selon la présente invention, ledit organe inférieur de fermeture ou ouverture de l'orifice inférieur de la chambre de dosage est avantageusement équipé d'un moyen de rappel tel qu'un ressort (100) tendant à ramener ledit organe inférieur vers la position de dégagement dudit deuxième conduit.

Dans un mode de réalisation représenté aux figures 5 et 6, ledit organe inférieur (2′) est équipé d'un ressort (100) en forme de languette qui vient en butée sur ledit deuxième conduit (6′) à l'extérieur de ladite zone en matériau flexible lorsque ledit organe inférieur est en position d'écrasement de ladite zone, de telle sorte que ledit ressort repousse ledit organe inférieur vers la position de dégagement par rapport à ladite zone lorsque lesdits moyens de commande de l'organe inférieur de fermeture ou ouverture le permette sous l'action desdits moyens mécaniques de liaison cinématique.

Ce dégagement n'est en effet possible que lorsque la came (4) est animée d'un mouvement vertical jusqu'à ce que le toucheau de came (13′) coopère avec le chemin de came de manière à se dégager du conduit (6′) tel que représenté sur la figure 6.

En outre, la came comme ledit organe inférieur peuvent être munis chacun d'un taquet respectivement un dit taquet de came (101) et un dit taquet d'organe inférieur (102) qui coopèrent de sorte que lors du mouvement de la came pour l'ouverture de l'orifice inférieur et la vidange de la chambre de dosage, ledit taquet de came (101) rencontre et entraîne ledit taquet de l'organe inférieur (102), provoquant le dégagement complet dudit organe inférieur par rapport au dit deuxième conduit.

En outre, au cours de ce mouvement, la came (4) munie d'un taquet de came (101) rencontre un taquet d'organe inférieur (102) relié à l'organe inférieur (2′) par son axe (2′b) dans la direction du dégagement par rapport au dit deuxième conduit.

Lorsque la came est animée d'un mouvement vertical de bas (figure 6) en haut (figure 5) :

– l'organe inférieur (2′) est libre de se dégager par rapport au dit deuxième conduit (6′) en position d'ouverture de l'orifice inférieur de la chambre de dosage. Toutefois, la pression de liquide de la chambre de dosage peut être insuffisante, c'est pourquoi

– le ressort (100) contribue à animer l'organe inférieur (2′) d'un mouvement dans la direction de dégagement par rapport au conduit et

– pour augmenter l'efficacité de fonctionnement, la rencontre dudit taquet de came (101) avec ledit taquet de bras (102) achève si besoin en est, de dégager complètement l'organe (2′) par rapport au conduit (6′).

Selon une autre caractéristique de la présente invention, la chambre de dosage est équipée d'une fenêtre amovible (18), le changement de la forme de ladite fenêtre permettant de changer le volume de la chambre de dosage et partant la quantité dosée.

Il convient de noter que la chambre de dosage est équipée classiquement de moyens d'aération, actionnés par la came de telle sorte que, lors de l'ouverture de l'orifice inférieur, ils font entrer dans la chambre de dosage une quantité d'air équivalente au volume de liquide versé de manière à en faciliter la vidange. Lorsque la came coulisse vers le haut, l'organe de fermeture de l'orifice supérieur (2) actionne des moyens qui libèrent un orifice d'entrée d'air dans la chambre de dosage.

De même un larmier est prévu dans le conduit tubulaire inférieur (6′) accélérant la formation d'une dernière grosse goutte, après sa fermeture, en fin de vidange de la chambre de dosage.

Dans un autre mode de réalisation non représenté, le fond supérieur (22) de la chambre de dosage (1) s'élèvera en pente vers l'orifice supérieur (3). La structure du fond inférieur (23) s'abaissera en pente vers l'orifice de sortie (3') pour faciliter la vidange. Le fond supérieur de la chambre de dosage pourra être en forme de coupole ou tronc cônique.

Les matériaux utilisés pour les différentes pièces du doseur seront des matériaux acceptables dans les normes réglementaires de l'industrie alimentaire. On peut citer par exemple pour les gaines ou zones en matériau souple flexible le silicone qui est un matériau à mémoire. Pour le reste, les pièces du doseur sont en général en matériaux plastiques, telles que des résines acétales, des polycarbonates.

**Revendications**

**1)** Doseur mécanique comprenant essentiellement une chambre de dosage (1) d'une quantité déterminée et mesurée de liquide ou dose, comportant :
- deux orifices (3, 3') supérieur et inférieur de remplissage et vidange, respectivement dans les parties supérieure et inférieure de ladite chambre,
- des organes supérieur et inférieur (2, 2') mécaniques, de fermeture ou ouverture des dits orifices respectivement supérieur et inférieur,
- des moyens de commande mécanique (5) des dits organes de fermeture et ouverture des dits orifices,
- des moyens mécaniques de liaison cinématique (4) entre lesdits organes (2, 2') de fermeture et ouverture et lesdits moyens de commande (5), caractérisé en ce que lesdits moyens de commande (5), lesdits moyens de liaison cinématique (4) et lesdits organes supérieur et inférieur de fermeture et d'ouverture (2, 2') sont extérieurs à la chambre de dosage (1).

**2)** Doseur mécanique selon la revendication 1, caractérisé en ce qu'il comporte :
- un premier conduit tubulaire (6) monté au-dessus dudit orifice supérieur (3) de la chambre de dosage et,
- un deuxième conduit tubulaire (6') monté au dessous dudit orifice inférieur (3') de la chambre de dosage,
- lesdits premier et deuxième conduits (6, 6') comportant une zone constituée en matériau flexible ( 10, 10')
- lesdits organes supérieur et inférieur de fermeture et ouverture (2, 2') consistant en des moyens d'écrasement ou de pincement de ladite zone en matériau flexible (10, 10'), pouvant adopter une position d'écrasement ou de pincement obstruant lesdits conduits pour la fermeture ou une position de dégagement pour l'ouverture,
- lesdits moyens de commande (5), lesdits moyens de liaison cinématique (4) et lesdits organes supérieur et inférieur de fermeture et d'ouverture (2, 2') étant extérieurs à la chambre de dosage (1) et aux dits conduits (6, 6').

**3)** Doseur selon la revendication 1 ou 2, caractérisé en ce que lesdits conduits sont des tubes (6, 6') rigides dans chacun desquels est ménagée une fenêtre (12, 12') et sont revêtus à l'intérieur d'une gaine (11, 11') dudit matériau flexible exposée aux dits organes (2, 2') de fermeture et ouverture par les zones (10, 10') en regard des dites fenêtres.

**4)** Doseur selon l'une des revendications 1 à 4, caractérisé en ce que lesdits moyens de liaison cinématique (4) sont constitués par une came (4) dotée de deux chemins de came (14, 14') supérieur et inférieur qui coopèrent respectivement avec lesdits organes (2, 2') supérieur et inférieur, de fermeture et d'ouverture de la chambre de dosage par l'intermédiaire de deux toucheaux de came (13, 13'), le mouvement de la came commandant les positions d'écrasement et de dégagement des dits organes supérieur ou inférieur (2, 2'), de telle sorte que lorsque l'organe supérieur (2) est en position d'ouverture de remplissage de ladite chambre, l'organe inférieur est en position de fermeture et lorsque l'organe supérieur (2) est en position de fermeture, l'organe inférieur est en position d'ouverture et de vidange de ladite chambre, l'ouverture et la fermeture des dits orifices (3, 3') supérieur et inférieur de ladite chambre étant synchronisées de façon à ce que l'orifice supérieur (3) ne commence à s'ouvrir que lorsque l'orifice inférieur (3') est complètement fermé et réciproquement l'orifice inférieur (3') ne commence à s'ouvrir que lorque l'orifice supérieur (3) est complètement fermé.

**5)** Doseur selon l'une des revendications 1 à 4, caractérisé en ce que lesdits organes (2, 2') supérieur et inférieur, de fermeture et d'ouverture de la chambre de dosage, comportent une partie (13, 13') formant ledit toucheau de came et une partie d'écrasement (2c, 2'c) desdits conduits en position de fermeture.

**6)** Doseur selon l'une des revendications précédentes, caractérisé en ce que la came (4) coulisse dans une direction longitudinale à composante verticale, le long de la chambre de dosage (1), lesdits chemins de came (14, 14') étant constitués chacun par deux pans longitudinaux supérieur (14a, 14'a) et inférieur (14b, 14'b) encadrant un pan incliné médian ( 14c, 14'c).

**7)** Doseur selon l'une des revendications précédentes, caractérisé en ce que lesdits moyens de commande consistent en une patte (5) montée à pivot autour d'un axe (15) et coopère cinématiquement avec la came (4) par l'intermédiaire de moyens d'appui (16) sur laquelle repose ladite came, de sorte que lorsque la patte pivote, les moyens d'appui (16) sont animés d'un mouvement à composante longitudinale entraînant le mouvement de la came.

8) Doseur selon l'une des revendications précédentes, caractérisé en ce que les parties formant toucheaux de came (13, 13') et les parties d'écrasement des organes de fermeture et ouverture (2, 2') présentent une forme arrondie (2c, 2'c) par laquelle ils rencontrent respectivement le chemin de came et la zone en matériau flexible.

9) Doseur selon l'une des revendications précédentes caractérisé en ce que lesdits toucheaux de came consistent en des galets (13, 13') montés chacun sur un premier axe de rotation (13a, 13'a) perpendiculaire à ladite direction longitudinale et parallèles aux dits pans de la came, de sorte que les galets peuvent rouler sur lesdits pans, chacun des dits premiers axes (13a, 13'a) étant solidaire d'une extrémité d'un bras (2a, 2'a) monté à pivot sur un deuxième axe (2b, 2'b) parallèle aux dits premiers axes, à son autre extrémité, de sorte que chaque bras (2a, 2'a) pivote entre deux positions extrêmes délimitées par la position de rencontre du chemin de came correspondant au dégagement d'une part, et la position de rencontre de la zone en matériau flexible du conduit correspondant à l'écrasement d'autre part.

10) Doseur selon la revendication 9, caractérisé en ce que chacun des dits bras (2a, 2'a) présente du côté pouvant rencontrer les zones en matériau flexible, une saillie de forme arrondie (2c, 2'c) constituant la partie d'écrasement proprement dite.

11) Doseur selon l'une des revendications 7 à 10, caractérisé en ce que les moyens d'appui de l'extrémité inférieure de la came comportent un galet (16) en rotation autour de son axe central (16a), ce dernier étant lié cinématiquement à ladite patte (5) et animé d'un mouvement dans ladite direction longitudinale à composante verticale lorsque ladite patte est actionnée.

12) Doseur selon l'une des revendications précédentes, caractérisé en ce que la came (4) est équipée à son extrémité supérieure d'un ressort de rappel (17) la repoussant vers le bas entraînant ainsi la fermeture de l'orifice inférieur (3') de la chambre de dosage.

13) Doseur selon l'une des revendications précédentes, caractérisé en ce que la chambre de dosage est équipée d'une fenêtre amovible (18), le changement de la forme de ladite fenêtre permettant de changer le volume de la chambre de dosage et partant la quantité dosée.

14) Doseur selon l'une des revendications précédentes, caractérisé en ce que lesdits organes de fermeture et ouverture (2, 2') sont équipés de moyens de rappel, tels qu'un ressort les ramenant vers la position de dégagement desdits conduits (6, 6').

15) Doseur mécanique selon l'une des revendications 3 à 14, caractérisé en ce que ledit organe inférieur de fermeture et ouverture (2'), est équipé d'un ressort (100) en forme de languette, qui vient buter sur ledit deuxième conduit (6') à l'extérieur de ladite zone en matériau flexible, lorsque ledit organe inférieur (2') est en position d'écrasement de ladite zone, de telle sorte que ledit ressort repousse ledit organe vers la position de dégagement, lorsque les moyens de commande de l'organe inférieur (2') le permette sous l'action desdits moyens de liaison cinématique.

16) Doseur mécanique selon l'une des revendications 5 a 15, caractérisé en ce que ladite came (4) et ledit organe inférieur (2') sont munis respectivement d'un taquet de came (101) et d'un taquet d'organe inférieur (102) qui coopèrent de sorte que lors du mouvement de la came pour l'ouverture de l'orifice inférieur et la vidange de la chambre de dosage, le taquet de la came (101) rencontre et entraîne le taquet de l'organe inférieur ( 102) provoquant le dégagement complet dudit organe inférieur (2') par rapport au dit deuxième conduit (6').

FIG.1

# FIG.2

# FIG.3

# FIG.4

FIG.5

FIG.6

Office européen
des brevets

**RAPPORT DE RECHERCHE EUROPEENNE**

Numero de la demande

EP  91 40 0404

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 342 701  (DETEC S.A.) <br> * Page 5, lignes 5-26; figures * | 1,2 | G 01 F  11/28 |
| Y | | 4,7,12-14 | |
| | --- | | |
| X | CH-A-  471 035  (N. SCHLUMBERGER & CIE) <br> * Colonne 5, ligne 31 - colonne 6, ligne 33; figures * | 1-3 | |
| A | | 14 | |
| | --- | | |
| Y | GB-A-2 210 024  (SALESPRINT TEMPLE 1988 LTD) <br> * Page 5, ligne 35 - page 6, ligne 26; page 9, lignes 2-6; figure 1 * | 4,7,12-14 | |
| A | | 5,6,8 | |
| | --- | | |
| A | FR-A-2 494 842  (CHIAROLANZA) <br> * En entier * | 1 | |
| | --- | | |
| A | US-A-2 895 653  (H.M. GIEPEN) <br> * Colonne 7, ligne 70 - colonne 3, ligne 5; figures * <br> ----- | 1 | DOMAINES TECHNIQUES RECHERCHES (Int. Cl.5) <br><br> G 01 F <br> B 67 D <br> F 16 K |

Le présent rapport a été établi pour toutes les revendications

| Lieu de la recherche | Date d'achèvement de la recherche | Examinateur |
|---|---|---|
| LA HAYE | 03-10-1991 | ROSE A.R.P. |

CATEGORIE DES DOCUMENTS CITES

X : particulièrement pertinent à lui seul
Y : particulièrement pertinent en comhinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.......................................................................
& : membre de la même famille, document correspondant

EPO FORM 1503 03.82 (P0402)